# EUROPEAN PATENT APPLICATION

(11) **EP 2 000 926 A2**
(43) Date of publication of application: **10.12.2008**
(21) Application number: 08005684.9
(22) Date of filing: 26.03.2008
(51) Int. Cl.: G06F 17/30

(54) **Web application configuration method and system**

(30) Priority: 05.06.2007 JP 2007149341
(71) Applicant: Hitachi, Ltd., Chiyoda-ku Tokyo 100-8280 (JP)
(72) Inventor: Kojima, Go, Chiyoda-ku Tokyo 100-8220 (JP); Ueda, Ryoichi, Chiyoda-ku Tokyo 100-8220 (JP)
(74) Representative: Strehl Schübel-Hopf & Partner

(57) **Abstract**

A Web application can be used without delivering data directly to a Web application provider. An application provider with a user interface function sends a user-operated Web browser an application script for providing a user interface function that operates on the Web browser. A data provider, which cooperates with the application provider using access information and provides a data manipulation function, manipulates the stored data in accordance with a data Add/Modify/Delete/Browse request for example if the data manipulation process is required in accompany with the user operation, and sends only information on the result back to the Web browser, a request source.

## Description

### BACKGROUND OF THE INVENTION

The present invention relates to a system configuration method of a Web application, more particularly, to a technique of limiting the destination of data that user deals with to a desired location.

Most in-company work systems that have been mounted so far as desktop applications running on a client device are now provided in form of Web service (Web application). Meanwhile, a growing increase in use of Web service created a problem that private and personal information of a user or business information of a company was often leaked out to a Web server.

To address the above problem, Japanese Patent Application Laid-Open Publication No. 2003-304234 discloses a method for protecting a user's private information with help of a communication device constituted by a WEB service providing unit for providing service, a tamper-resisting storage unit for storing a user's secret key required for encryption or decryption processing that is performed in transmitting information to a certification authority, and a CPU for encrypting or decrypting information by the user's secret key stored in said tamper-resisting storage device.

This method reduces unnecessary complicated registration of a user such that the risk of reveling the user's private information such as a secret key to a third party can be lowered.

In addition, Japanese Patent Application Laid-Open Publication No. 2006-39674 discloses an information providing method for providing a user with details on an abstract the user selects, under the condition that the abstract selected by the user is concealed to an information provider, the method being realized by a device to receive purchase desire information transmitted from a user terminal while keeping a selected keyword and a selected element secret; compute a transmission key from the purchase desire information and the secret key; transmit the transmission key to the user terminal; and make the user terminal decode only information corresponding to the keyword selected from the transmission key, the selected element, and multiple kinds of information.

According to this method, the user is able to obtain information he or she needs from the information provider, while concealing which information is needed to the information provider.

### BRIEF SUMMARY OF THE INVENTION

One of deficiencies of the related art technique is that either a user's device or an information provider's device must have a special unit or program for concealing information. Another deficiency of the related art technique is that it cannot be applied universally because examples of information that can be concealed are information being communicated for an authentication process, information a user wants to obtain, and a limited scene or limited information.

In view of foregoing disadvantages, the present invention is directed to a system capable of utilizing applications from an application provider, without newly introducing a special function or device to a user side or without giving user's data to the application provider.

To achieve the above object, there is provided a system where an application function being served on the Web (hereinafter, a Web application) provided typically in a single server (organization) is split into two, and the Web application function is provided by two servers (organizations): a user interface server (organization) with a user interface function (hereinafter, an application provider), and a data manipulation server (organization) (hereinafter, a data provider) with a data manipulation function.

In the traditional Web application the user interface function is configured in HTML generated by a server that provides the Web application. Therefore, when a user inputs information, the information is transmitted to a Web application providing server. Then the Web application providing server generates an HTML reflecting the input information and transmits it to a Web browser, so as to repeat a process of displaying a new screen. The data manipulation function is also provided by the same server, and executed as an HTML reflecting the user input is generated.

The application provider of the present invention system provides a program running on the Web browser (hereinafter, an application program) to a Web browser operated by a user. This application program is a program running on the Web browser, so there is no need to access to the application provider's server when display on the screen needs to be changed.

The data provider of the present invention system does not generate an HTML for providing a user interface, but manipulates data kept in the server in the data provider according to a data Add/Modify/Delete/Browse request and sends only the information on the result back to a request source.

A part of the application program that requires the data manipulation process in accompany with the user operation is set to be communicated with the data provider based on the specification of communication of the data provider, such that the data manipulation can be carried out on the data provider.

Therefore, the present invention provides a Web application configuration method and a configuration system thereof for providing an application service on a Web based on a request from a user using a Web browser, wherein the system includes a user interface server for providing a user interface function in the Web browser and a data manipulation server for providing a data manipulation function related to manipulation of the data. Here, the Web browser receives an application program (application script) for the user interface function from the user interface server, and displays the received application program (application script) on a screen. The data manipulation server executes the data manipulation function according to a request inputted from the Web browser, and sends a manipulation result to the Web browser for use in updating the screen display.

According to the present invention, a user is provided with a system, in which the Web application function is divided into two: the user interface function and the data manipulation function, each being a separate service in a different server, and the user can use a Web application without handing the data dealt with in the Web application over directly to the user interface having the user interface function.

More preferably, by incorporating the data manipulation server with the data manipulation function into a user's organization or a user's reliable organization, it becomes possible to utilize a Web application in use of a user interface function provided by the user's organization or the user's reliable organization, not necessarily revealing the information the user deals with to outside.

In addition, a system that manipulates common data by the plural number of different user interface functions can be provided more easily. Further, since the server with plural user interface functions can be registered and selected as a target, it is possible to exclude any illegal programs that transmit data to outside.

### BRIEF DESCRIPTION OF THE DRAWINGS

Fig. 1 shows a system function configuration and a network configuration according to a first embodiment;
Fig. 2 shows one example of an initial page in the first embodiment;
Fig. 3 shows a system flow chart according to the first embodiment;
Fig. 4 shows application script information kept in access information according to the first embodiment;
Fig. 5 shows one example of data API information kept in access information according to the first embodiment;
Fig. 6 shows one example of personal setup information (206) in the first embodiment;
Fig. 7 shows a flow chart of the system according to a second embodiment of the present invention;

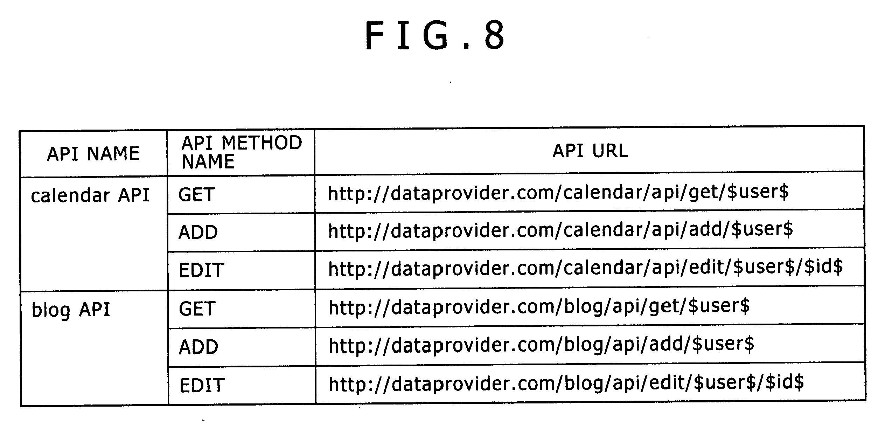

Fig. 8 shows one example of data API information kept in access information according to the third embodiment;
Fig. 9 shows a system flow chart according to a fourth embodiment;
Fig. 10 shows a data API communication format according to the first embodiment;
Fig. 11 shows one example of a screen provided by a schedule management application according to the first embodiment;
Fig. 12 shows one example of an application script select page according to the second embodiment;
Fig. 13 shows one example of information from an add data provider according to the first embodiment;
Fig. 14 shows a system function configuration and a network configuration according to a fifth embodiment;
Fig. 15 shows one example of a screen provided by a schedule management application according to the fifth embodiment;
Fig. 16 shows a system flow chart according to the fifth embodiment;
Fig. 17 shows one example of AD information (34) according to the fifth embodiment; and
Fig. 18 shows an implementation example of the network configuration according to the first embodiment.

### DETAILED DESCRIPTION OF THE INVENTION

Hereinafter, preferred embodiments of the present invention will be set forth in detail with reference to the accompanying drawings so that those skilled in the art can easily carry out the invention.

### [First Embodiment]

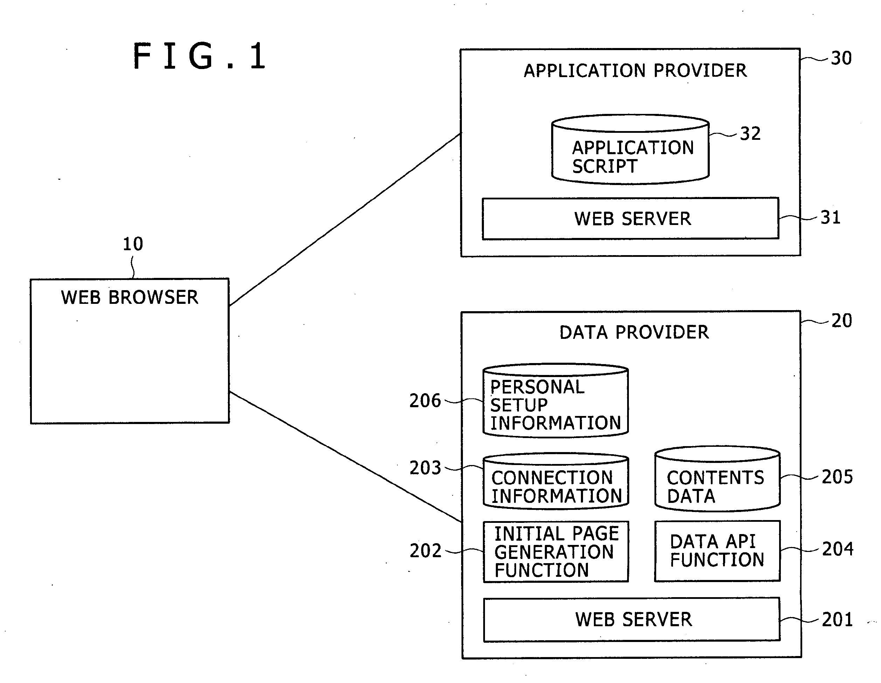

A first embodiment of a network system configuration will now be explained with reference to Fig. 1.

The network system of the first embodiment includes a plurality of information processors 10, 20, and 30 connected to a network. Among those information processors are (1) more than one information processor 10 on which a Web browser is installed (hereinafter, a Web browser), (2) an information processor 20 that provides data manipulation functions such as data search, add, delete, edit, and reference (hereinafter, a data provider) among other functions of the Web application available in the system, and (3) an information processor 30 that provides user interface functions (hereinafter, an application provider) having an access to the Web browser among other functions of the Web application available in the system.

Although Fig. 1 illustrated only one Web browser 10, there may be as many Web browsers as the number of users. Each of the plural information processors is configured with a computer system typically used, so it would be needless to say that individual information processor includes a CPU, a storage unit such as a memory or a disk, and a communication unit connected to an external network.

The following will now explain functions of the elements of the system according to the first embodiment and an operational sequence of processes of the system.

The data provider 20 is constituted by a Web server 201 that receives a process request from the Web browser 10 through a network and sends a Web page in response to the process request; an initial page generation function 202 for generating an initial page to execute Web applications by the system; access information 203 containing an application script 32 as an application program provided by the application provider 30 and the information required for accessing to functions provided by the data provider 20; a data API (Application Program Interface) function 204 which provides a user interface function to manipulate data dealt with by the Web application; a content data 205 that are dealt with by the Web application of the system; and a personal setup information 206 for use with a user. The access information 203, the content data 205, and the personal setup information 206 are stored in the storage unit. The initial page generation function 202 and the data API function 204 are programs which are usually stored in the storage unit and executed by the processors.

The application provider 30 is constituted by a Web server 31 for receiving a process request from the Web browser 10 through the network and sends an application script in response to the process request; and an application script 32, i.e. an application program for providing a user interface function among other Web application functions of the system. Programs like this application script 32 are typically stored in the storage unit of an information processor that constitutes the application provider 30.

The system of the first embodiment provides a user with an application execution environment which utilizes the data API function of the data provider 20 for the data manipulation process (data creating, editing, reference, and deleting), and functions provided by the application provider 30 for a user interface function, while handling communications among the Web browser 10, the data provider 20, and the application provider 30 through the network.

The following will now explain in detail the process sequence of the system according to the first embodiment.

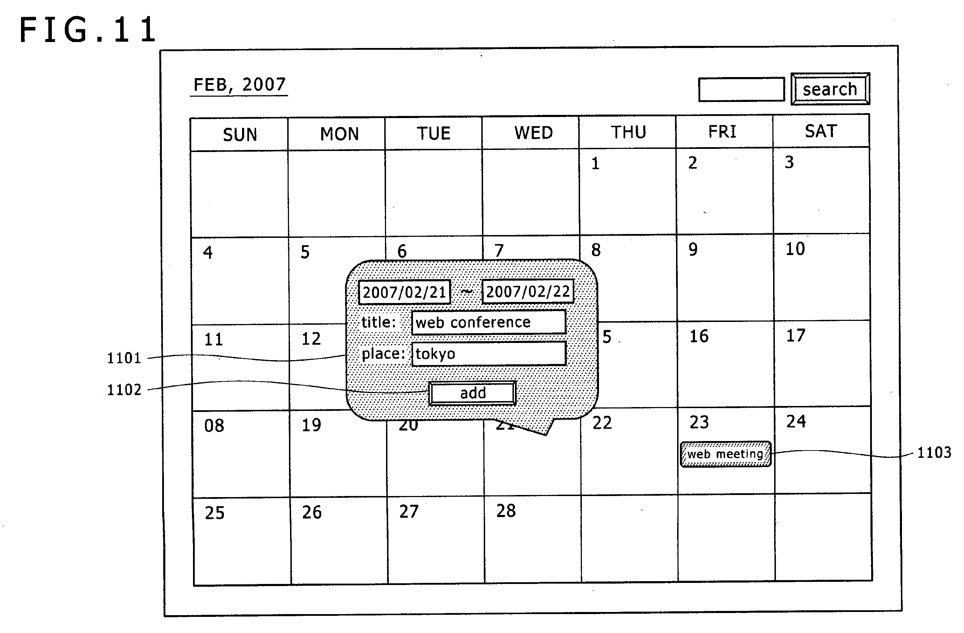

The explanation will be based on a schedule management application employed as an implementation example of the system. Fig. 11 illustrates one example of a screen provided by a schedule management application. In the same drawing, a shaded area 1101 allows a user to add a new schedule starting from Feb 21, 2007. After the user inputs a schedule information, he (she) simply clicks an 'add' button 1102 to add the schedule information. Another shaded block 1103 indicates that there is a "Web meeting" scheduled on Feb 23, 2007. This schedule management application presents a calendar on the screen and a user's schedule information is marked in the calendar, such that the user can add, modify/delete, or browse of the schedule information.

When the schedule management application is applied to the system of the first embodiment, the application provider 30 displays a calendar or schedule information on the screen of the Web browser 10, and provides the application script 32 with a function for manipulating the schedule information; and the data provider 20 keeps the schedule information in the content data 205, and provides the Add/Modify/Delete/Browse functions of the schedule information by means of the data API function 204.

As far as the data manipulation process is concerned, the application script 32 provided by the application provider 30 performs communications on the data provider 20 based on the data API function 204 provided by the data provider 20, and has a description making the data provider 20 carry out the data manipulation process. In other words, the application provider 30 and the data provider 20 in this system are cooperated with each other with the data API as a link.

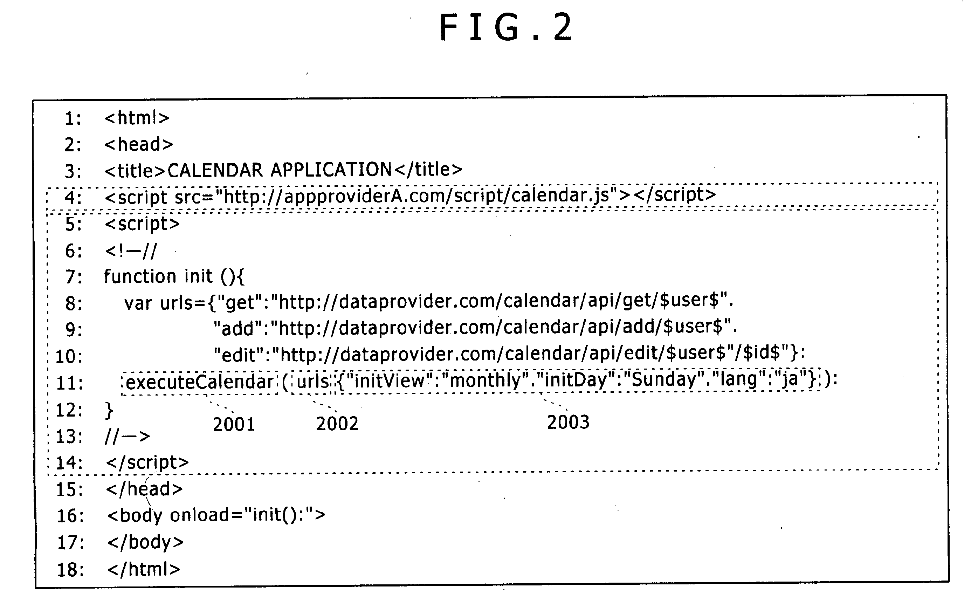

Fig. 2 depicts one example of HTML (Hyper Text Markup Language) of an initial page that is generated by the initial page generation function 202 of the data provider 20. For convenience of description each line is given with a number on the left end.

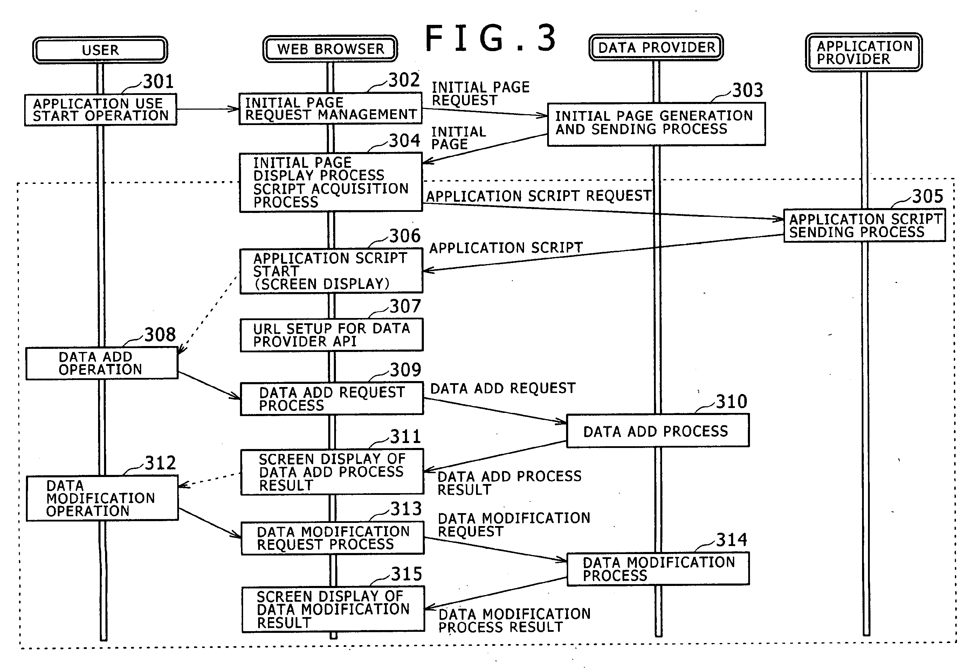

Fig. 3 is a flow chart for describing a sequence of processes of the system according to the first embodiment. The following will now explain the process sequence of the first embodiment, following the flow in Fig. 3. A block enclosed by dotted lines in Fig. 3 after Step S304 covers the basic process flow of the system, which is used in common in other embodiments (from the second embodiment).

First, to use the system a user accesses to an initial page provided by the data provider 20 to the Web browser 10 (S301). The Web browser 10 transmits an initial page acquisition request to the data provider 20 by user manipulation (S302). When the data provider 20, i.e. the Web server 201 of the data provider 20 to be more specific, receives the initial page acquisition request, it generates an initial page that looks like one shown in Fig. 2, and sends the generated initial page as a reply to the Web browser 10, a request source (S303).

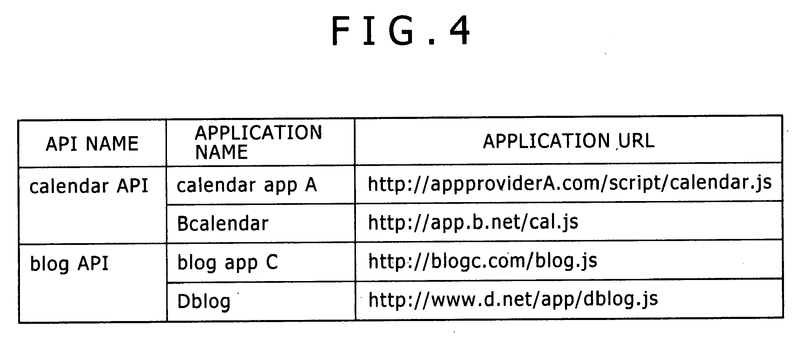

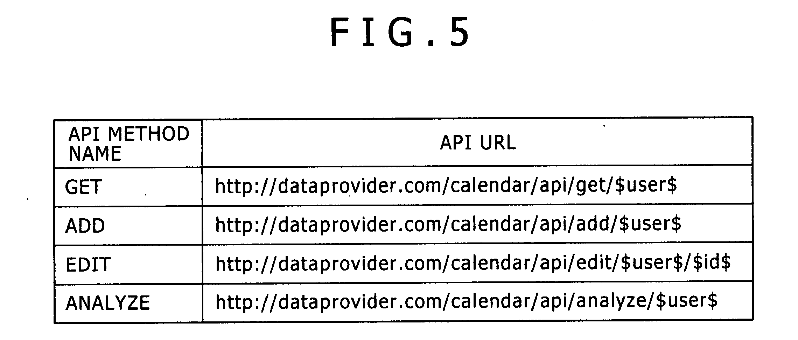

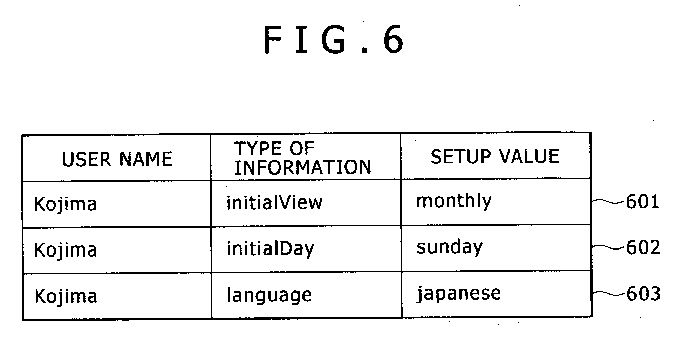

The initial page generation function 202 generates the initial page based on the information set up in the access information 203. Fig. 4 and Fig. 5 respectively show a specific example of the access information 203. In detail, Fig. 4 is an example of URL information of an application script (hereinafter, application script information) provided by the application provider 30, and Fig. 5 is an example of the data API function 204 provided by the data provider 20 and URL corresponding information (hereinafter, data API information). Moreover, Fig. 6 shows an example of the personal setup information 206.

As shown in Fig. 2, an initial page is constituted with two parts: one is a block at the 4th line enclosed by dotted lines, which is a reference technique of the application script 32 provided by the application provider 30; and the other is a block from the fifth through the 14th line enclosed by dotted lines, which is a script technique to reflect the data API function 204 provided by the data provider 20 for the application script, the URL corresponding information setup, and the user's personal setup.

The reference technique part as the first part of the application script 32 is generated based on the application script information set up in the access information 203. In case of the application script information illustrated in Fig. 4, if the application script which the user uses has a name 'calendar app A', http://appproviderA.com/script/calendar.js is used for the reference technique of the application script.

The script technique reflecting the data API function 204 provided by the data provider 20 for the application script, the URL corresponding information setup, and the user's personal setup as the second part of the application script is generated based on the data API information set up in the access information 203 and the personal setup information 206. In case of the data API information illustrate in Fig. 5, if the data API being provided has a name "GET",
http://dataprovider.com/calendar/api/get/$user$ is used as a URL for setting up the application script. Similarly, if the data API has names "ADD" and "EDIT", http://dataprovider.com/calendar/api/add/$user$ and http://dataprovider.com/calendar/api/edit/$user$/$Id$ are used respectively as a URL for setting up the application script.

In particular, "$user$" or "$id$" in the URL described above is a part that changes dynamically during the process of the script, and both mean filling the corresponding parts with user ID and schedule information ID and using them for manipulation target data, respectively. For instance, if data of a user ID "kojima" needs to be processed, a URL of the data API "GET" becomes "http://dataprovider.com/calendar/apl/get/kolima". The remaining API name "ANALYZE" in Fig. 5 is not explained here because it is not relevant to the first embodiment.

Referring next to the personal setup information 206 as illustrated in Fig. 6, if a user is "kojima", personal setup information for the application script includes an information type initView with a value of monthly (record 601) as the setup information of an initial display method of calendar; an information type initDay with a value of Sunday (record 602) as the setup information of an initially displayed weekday; and an information type lang with a value of ja (record 603) as the setup information of language used for display.

Therefore, the initial page generation function 202 of the data provider 20 generates an initial page following the sequence described above. When the initial page being thusly generated is received, the Web browser 10 displays the initial page on the screen in HTML received (S304 in Fig. 3). As shown in Fig. 2, the received initial page contains a reference technique of the application script 32, so the Web browser 10 transmits a URL script acquisition request that is described in the reference technique to the application provider 30. When the application provider 30, i.e., its Web server 31 to be specific, receives the script acquisition request, it sends an application script 32 corresponding to the acquisition request, the application script being selected from the scripts the application provider 30 keeps, to the Web browser 10, a request source (S305).

Upon receiving the application script 32, the Web browser 10 starts execution of the received application script 32 (S306). The Web browser 10 then sets up a URL of the data API provided by the data provider 20 according to a script described in a next initial page (S307). Functions used for the setup process are defined in the script 32 from the application provider 30.

In the example shown in Fig. 2, information on a relation between data API and URL defined from the 8th line through the 10th line and information being set up as the personal setup information 206 are used as factors, and an execute Calendar function runs in a place 2001. This execute Calendar function is defined in the script 32 provided by the application provider 30 and is operated for receiving the information on a relation between data API and URL offered as a factor that is shown in a place 2002 and for the data manipulation process. Moreover, the user interface operation is controlled based on a value of the second factor shown in a place 2003. Here, the personal setup information 206 illustrated in Fig. 6 is taken as personal setup values of a user. That is, the application script sets monthly as an initial view of the calendar, Sunday as an initial weekday, and Japanese as a language used for display.

Execution of the script starts in Step S306, and the data manipulation is carried out according to user manipulation after an URL of the data API is set up in Step S307.

Next to Step S306, the Web browser 10 displays information on the screen, or displays a user interface for manipulating data, in response to the execution of the application script 32. In case of a schedule management application, the Web browser 10 displays a calendar, and provides an interface such that a user may add schedule information to a marked date, or edit/delete the schedule information having been set up on the marked date.

Next, as shown in the process flow in Fig. 3, if the user performs a manipulation, such as, adding a schedule information to a marked date in the Web browser 10 (S308), the Web browser 10 generates an event for that manipulation. Being caused by the generation of the event, the application script 32 adds the schedule information based on the user input information. A request information based on the user input information is generated in a data API format provided by the data provider, and the request information is transmitted to the data provider 20 via a non-synchronous communication (S309).

After receiving the request information by the Web server 201, the data provider 20 performs an Add process on the content data 205 by the data API function 204 according to the request information, and replies by sending the Add process result to the Web browser 10, a request source (S310).

The Web browser 10 having receiving the Add process result delivers information on the Add process result to a related processor of the application script 32 that performed an Add request transmission process. According to the information on the Add process result, the application script 32 processes the Add process result, e.g., displaying its purpose on the screen (S311).

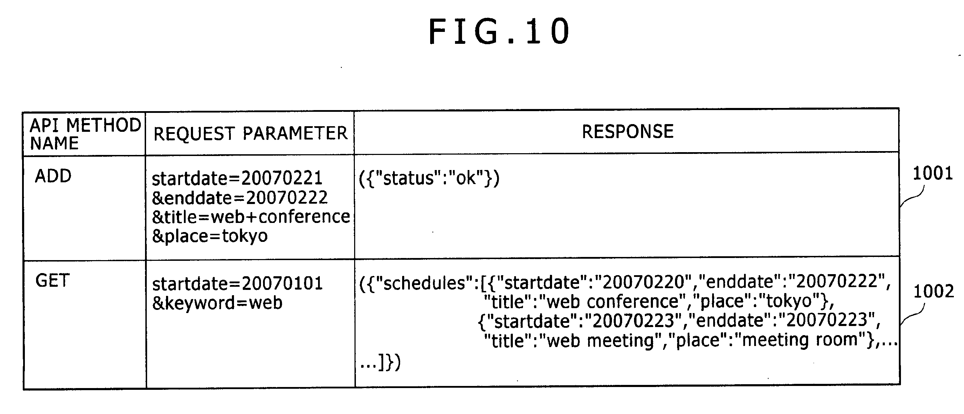

Fig. 10 is a table illustrating one example of the data API communication format used in the first embodiment. In Step S309 the application script 32 sends the request information to the data provider 20, using the communication format shown in Fig. 10. In Step S311, the data provider 20 interprets information obtained in transmission result of the request information, and displays the result on the screen. Reference numeral 1001 in Fig. 10 indicates that a request parameter, "startdate=20070221&enddate=20070222&title=Web+conference&p lace=tokyo", is generated in case that a schedule titled "Web conference" starting on Feb 21, 2007 and ending on Feb 22, 2007, at a place "tokyo" is to be added during the schedule information adding process. In result thereof, when the Add process is over, the data provider 20 sends "({"status":"ok"})" as a reply. Reference numeral 1002 in Fig.. 10 indicates that a request parameter, "startdate=20070101&keyword=Web", is generated in case that a schedule information search is carried out under conditions that the target schedule starts after Jan 1, 2007 and a character string like "Web" is included in the title or the place. In result thereof, the data provider 20 replies by sending "({"schedules":[{"startdate":"20070220", "enddate":"20070222", "title":"Web conference", "place":"tokyo"}, {"startdate":"20070223", "enddate":"20070223", "title":"Web meeting", "place":"meeting room"},....,]})" as the schedule information conforming to the conditions.

Similarly, in the process flow of Fig. 3, if the user performs a manipulation, such as, modifying a schedule information to a marked date in the Web browser 10 (S312), the Web browser 10 generates an event for that manipulation. Being caused by the generation of the event, the application script 32 modifies the schedule information based on the user input information. A request information based on the user input information is generated in a data API format provided by the data provider, and the request information is transmitted to the data provider 20 (S313).

After receiving the request information by the Web server 201, the data provider 20 performs a Modify process on the content data 205 by the data API function 204 according to the request information, and replies by sending the Modify process result to the Web browser 10, a request source (S314).

The Web browser 10 having receiving the Modify process result delivers information on the Modify process result to a related processor of the application script 32 that performed a Modify request transmission process. According to the information on the Modify process result, the application script 32 processes the Modify process result, e.g., displaying its purpose on the screen (S315).

Other user manipulations such as a Delete process or a Browse process of schedule information are done in like manner. That is, the Web browser 10 transmits a corresponding request information to the data provider 20, and the data provider 20 having received the request information executes a data manipulation process.

Although Steps S308 to S311 and Steps S312 to S315 were explained in sequence for convenience of explanation, they can be performed irrespective of the sequence because all of them start by user manipulation.

According to the system of the first embodiment discussed earlier, a system user may use a Web application without handing the data dealt with therein over directly to the application provider 30 that provides user interface functions among Web applications. Moreover, a Web application developer may relay a data API format to separate a user interface function and a data manipulation process function of the Web applications, such that each may be presented on a server in a different domain.

Therefore, a system developer of a company may install a data provider 20 corresponding to an application function which is open on the Internet in his company, so that he can use the application function open on the Internet, while retaining data in the company. On the contrary, a developer of an application on the Internet may develop an application function for a data API corresponding to the data provider that is installed in a company, so that he can offer an application available on the Internet without direct handling of data in the company. Further, the application provider 30 may further include the personal setup information 206.

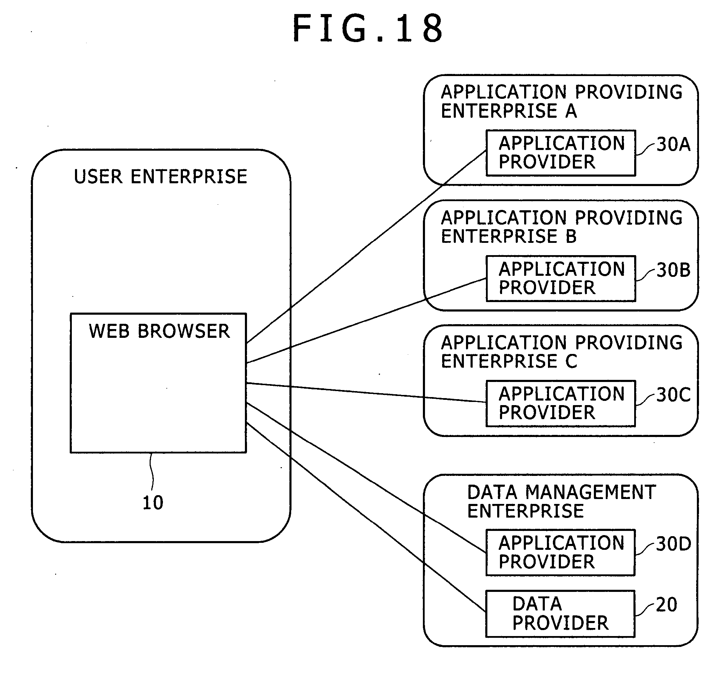

Also, according to the system configuration of this embodiment, the data provider 20 may be run in a different network from a company using the Web browser 10. Thus, it is also possible to put the data provider 20 at a data center or the like, which can protect data more safely. In this way, as shown in Fig. 18, it can be implemented to a data management business that enables the use of external applications while safely protecting data of a client company.

Fig. 18 illustrates that each of application providers 30A, 30B, 30C, and 30D has a Web server 31 and an application script 32, similar to the application provider 30 in Fig. 1, and is provided by a different enterprise. The application provider 30D and a data provider 20 are provided by a data management enterprise which is doing business for conducting an application providing service and a data management service at the same time. The data provider 20 has the same configuration with the data provider of Fig. 1. As such, any enterprise using the Web browser 10 may utilize applications provided by the data management enterprise and at the same time, safe management of its data is guaranteed.

### [Second Embodiment]

The first embodiment described above explained a configuration for separating the user interface function and a data manipulation process function among the Web application functions, but it was based on an assumption that there is one kind of the application script being accessed by an initial page provided from the data provider 20. However, in case that a plurality of application providers provide functions corresponding to the data manipulation function of a data provider, a user is able to select and use a user interface function to handle the data manipulation function provided by the data provider. This function can be provided by adding a select page generation function of the application provider to the initial page generation function explained earlier in the first embodiment.

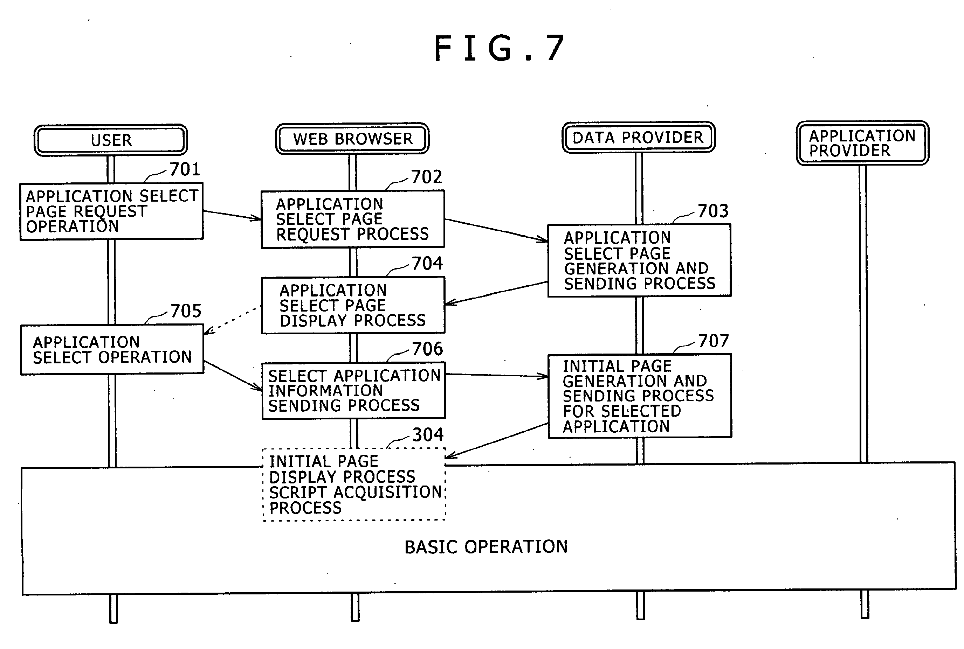

With reference to a flow chart in Fig. 7, the following will now describe a process sequence of a system according to the second embodiment, in which the system of the second embodiment executes an application provider select process in addition to the processes of the system explained in the first embodiment.

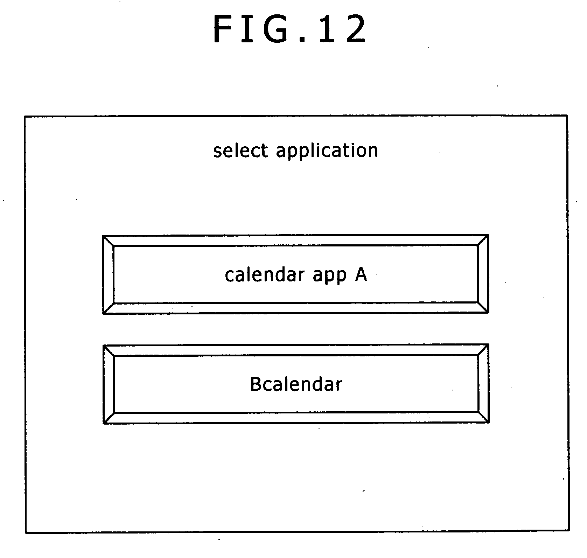

First, a user accesses to an application script select page provided by the data provider 20 to the Web browser 10 (S701). The application script select page is configured with a user interface, allowing the user to select an application script among application scripts corresponding to the data manipulation function provided by the data provider 20. Fig. 12 depicts one example of the application script select page, in which a user clicks a button to select an application script under a name described on the button.

The Web browser 10 transmits an application select page acquisition request to the data provider 20 by user manipulation (S702). When the data provider 20, or the Web server 201 of the data provider 20 to be more specific, receives the application select page acquisition request, it generates an application select page and sends the generated application select page to the Web browser 10, a request source, as a reply (S703).

The application select page is generated by the initial page generation function 202 on the basis of the information kept in the access information 203, regarding an application script (hereinafter, application script corresponding information) in a data API provided by the data provider 20. Fig. 4 depicts one example of the application script information. If a data API provided by the data provider 20 has a name "calendar API", it means that there is an application script with a name "calendar app A" and an application script with a name "Bcalendar". That is to say, the initial page generation function 202 includes "calendar app A" and "Bcalendar" as application scripts available for the user, and generates an application select page to allow the user to select one of them.

After receiving the application select page, the Web browser 10 displays it on the screen (S704).

Then the user browses information on application scripts displayed on the screen, and selects one of the application scripts in the Web browser 10 (S705). Once the user selects on the application script, the Web browser 10 sends the data provider 20 an initial page acquisition request that includes information on the selected application script as well as a reference technique for the selected application script (S706). When the data provider 20, or the Web server 201 of the data provider 20 to be specific, receives the initial page acquisition request for the selected application script, it generates an initial page for the selected application script through the initial page generation process function 202, and sends the generated initial page to the Web browser 10, a request source, as a reply (S706). Here, the initial page generation process is same as Step S303 of Fig. 3 explained in the first embodiment.

The Web browser 10 then displays the initial page thusly being received (S304). The subsequent process flow is same as the basic flow after Step S304 of Fig. 3 explained in the first embodiment.

According to this embodiment, a system capable of selecting and executing a plurality of application scripts corresponding to the data API provided by the same data provider 20 can be provided to the user. Moreover, since data to be dealt with is in the data provider no matter which application script is used, it is possible to manipulate common data with plural application scripts.

### [Third Embodiment]

Different from the second embodiment system having a function to select and use plural application scripts 32, a system for dealing with information provided by plural data providers may be configured as well. In case of a schedule management system, work schedule information may be managed by an in-company data provider, while information on national holidays or information on weather forecasts may be obtained from an external data provider and displayed with the work schedule information side by side.

Fig. 5 depicts one example of the access information 203 in the first embodiment. An initial page is generated in a manner to include a process for setting up information on a data API provided by the data provider according to the information to the application script 32 provided by the application provider 30, such that the application script 32 can operate a communication process according to the data API information when the application script 32 performs a data manipulation process. Likewise, an initial page is generated in a manner to keep information on another data provider containing other information to be acquired in the access information 203, such that a communication process can be carried out according to this information when the application script 32 performs a process of acquiring information provided by another data provider.

The above-described case will now be explained as the third embodiment. Here, the application script 32 has other functions besides the user interface function of the schedule information management application explained earlier in the first embodiment. For instance, the application script 32 obtains information provided by another data provider, and displays the information in a format corresponding to the information type next to the schedule information. Moreover, the application script 32 of this embodiment has a means for setting up information required for communications with other data providers.

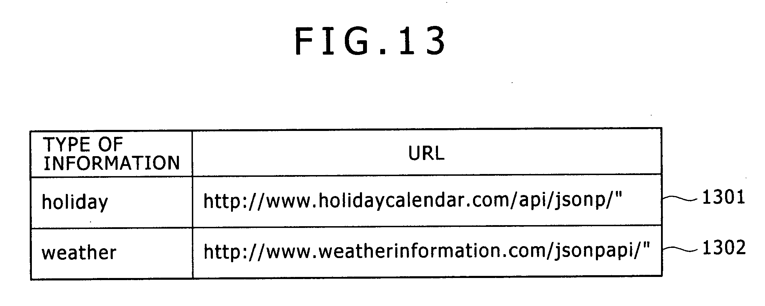

Fig. 13 illustrates one example of information from a data provider, which is set up in the access information 203 and has other information to be acquired. For the, generation of an initial page in Step S303 of Fig. 3 out of the process flow explained in the first embodiment, a script technique (hereinafter, an additional data provider setup) is newly added to set up information of a data provider having other information to be acquired according to the information shown in Fig. 13. Reference numeral 1301 in Fig. 13 indicates that the information type is "holiday" and information of a data provider with a URL "http://www.holidaycalendar.com/api/jsonp" is a candidate for acquisition. Reference numeral 1302 indicates that the information type is "weather" and a data provider has a URL "http://www.weatherinformation.com/jsonpapi".

In case that a function for setting up the information required for communication with another data provider of the application script 32 is named "setOptionnalInformationURL", a technique such as "setOptionnalInformationURL({"type":"holiday", "url":"http://www.holidaycalendar.com/api/jsonp"}, {"type"."weather", "url":http://www.weatherinformation.com/jsonpapi});" is newly generated. When this process is added to the initial page illustrated in Fig. 2, the technique is inserted between the 11^{th} line and the 12th line.

According to the third embodiment, the application script 32 may use information provided by plural data providers, and an application displaying manifold information can be built. Although this embodiment illustrated only the data acquisition in another data provider, the present invention is not limited to the data acquisition but can be applied to an update process such as data adding, editing, or deleting.

### [Fourth Embodiment]

In every embodiments having been explained so far, a user who wants to use the system of the present invention first accessed to the data provider 20 by operating the Web browser 10. However, it is also possible to find an application script to be used first and use the system later. This case will now be explained as the fourth embodiment.

A function for setting up access information in an application script is added to the initial page generation function 202 of the data provider 20, and an application provider provides a page for setting up the access information 203 (hereinafter, an application use start page) using this function. As such, a user is provided with a flow, in which an application script is searched and the application script to be used for setting it up in a data provider is used when the target application script was discovered in result of the search.

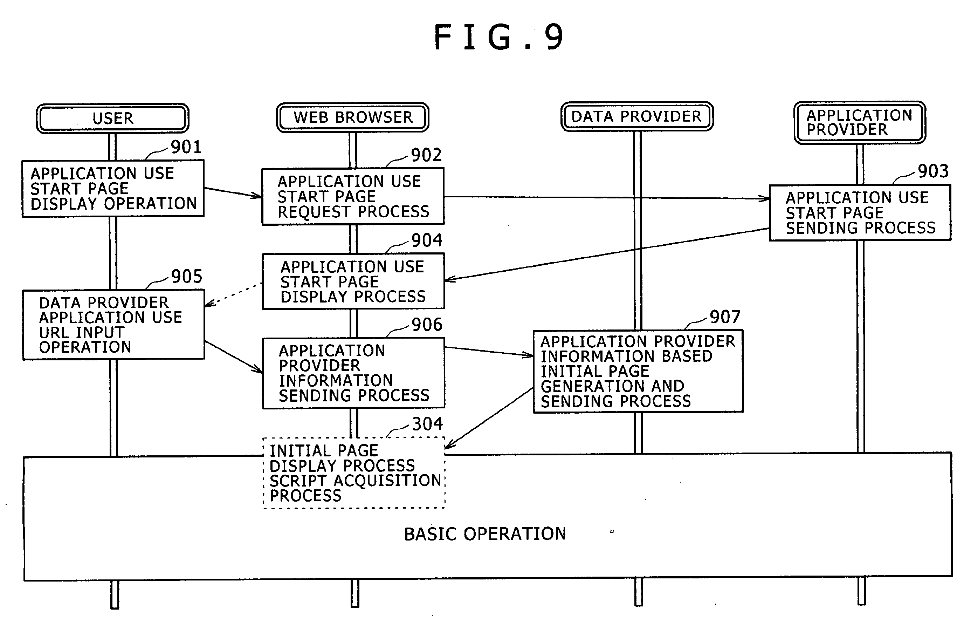

With reference to a flow chart in Fig. 9, the following will now explain the process sequence of a system which has the functions of the first embodiment system as well as a function for setting up access information in an application script. In particular, the flow chart in Fig. 9 starts with a step where a user discovers an application script to be used and starts an operation for displaying an application use start page.

First, the user accesses to an application use start page provided by the application provider 30 to the Web browser 10 (S901).

The Web browser 10 sends the application provider 30 an acquisition request for the application use start page by user manipulation (S902). When the application provider 30, or the Web server 31 of the application provider 30 to be specific, receives the acquisition request for the application use start page, it sends the Web browser 10, a request source, the application use start page as a reply (S903).

The application use start page includes a user interface, allowing the user to input a URL (hereinafter, an access information setup URL) for accessing to the access information setup function of an application script in the data provider 20. The page also functions for sending the access information to a corresponding application script to an input URL, setting up the application script in the data provider, and generating an initial screen for starting the use of the application script.

After receiving the application use start page, the Web browser 10 displays it on the screen (S904).

When the user inputs an URL for setting up the access information (S905), the Web browser 10 sends the data provider 20 (the data provider 20 corresponding to the URL for setting up the access information inputted by the user) the information on the application script as well as requests for setting up an access to the application script and for generating an initial page for the corresponding application script (S906) for the sake of the URL for setting up the access information. When the data provider 20, or the Web server 201 of the data provider 20 to be specific, receives the requests for setting up an access and for acquiring an initial page, it adds information on the application script to the access information through the initial page generation process function 202, generates an initial page for the added application script, and sends the generated initial page to the Web browser 10, a request source, as a reply (S907). The initial page generation process is same as Step S303 in Fig. 3 explained earlier in the first embodiment.

The Web browser 10 then displays the initial page being thusly received (S304). The subsequent process flow is same as the basic flow after Step S304 of Fig. 3 explained in the first embodiment.

According to this embodiment, a user is provided with a flow, in which the user searches an application script in a network by operating the Web browser 10 and sets it up in a data provider for use when an application script to be used is discovered in result of the search.

### [Fifth Embodiment]

The first through fourth embodiments explained that the data provider performs the data manipulation process among the application functions and the application provider performs the user interface process, but the data provider 20 may further include other functions besides the data API function among the data manipulation processes, i.e., an indexing process for increasing the speed of a search process or a data analysis process including a specific fetching process of a content for delivery of AD based on the content.

The following will now explain a system having not only the functions of the system with the schedule information management application shown in the first embodiment but also a function of displaying a content-based AD on the screen, as the fifth embodiment.

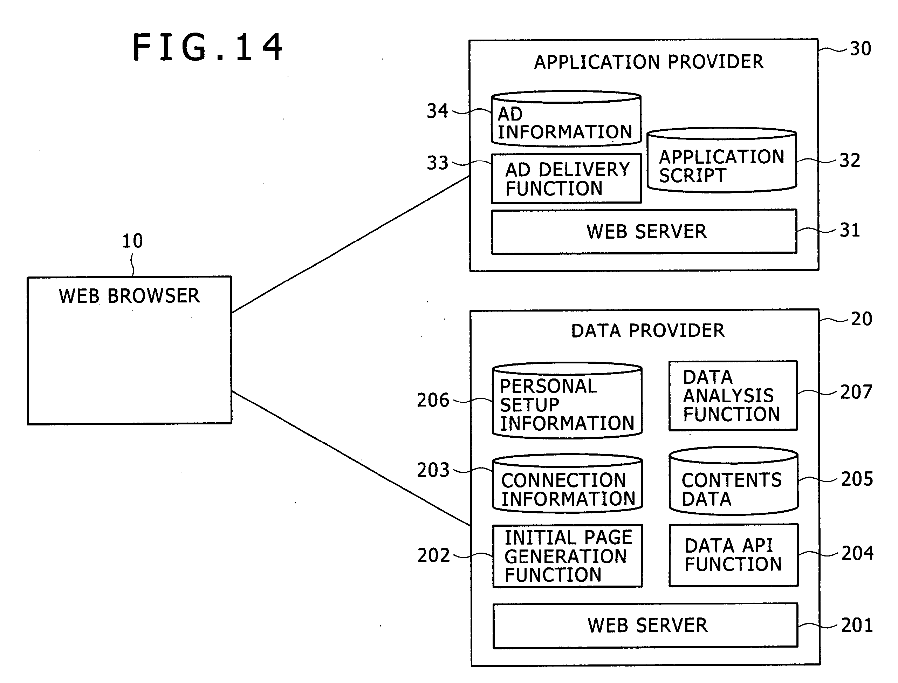

Fig. 14 shows the configuration of the system according to the fifth embodiment. Different from the configuration shown in Fig. 1, the system in Fig. 14 includes a data analysis function 207 for the data provider 20, and an AD delivery function 33 and AD information 34 for the application provider 30. Moreover, the data API function 204 newly includes a function of providing feature information on a content data fetched (or extracted) by the data analysis function 207. This new function is provided as an API method, an ANALYZE function, recorded on the last 4th line of the data API information, and uses http://dataprovider.com/calendar/api/analyze/$user$ as a URL. The application script 32 accesses to this URL to acquire feature information for the content data that is fetched by the data analysis function 207.

Also, the application script 32 has new functions. That is, it obtains feature information for the content data from the data API function 204, sends the acquired feature information to the AD delivery function 33, acquires a relevant AD information, and displays it on the screen.

Apart from the data API function, the data analysis function 207 involves an indexing process for increasing the speed of a search process or a data analysis process including a specific fetching process of a content for delivery of AD based on the content. Here, the data analysis function 207 analyzes the contents kept in the content data 205 in advance, and records the feature information on each content as part of the content data.

Meanwhile, the AD delivery function 33 is a function for transmitting an AD based on the content. That is, when the Web server 31 receives a keyword, which is a feature of the content, it extracts a relevant AD, which is also suitable for the keyword, from the AD information 34 and sends the AD information to a request source as a reply.

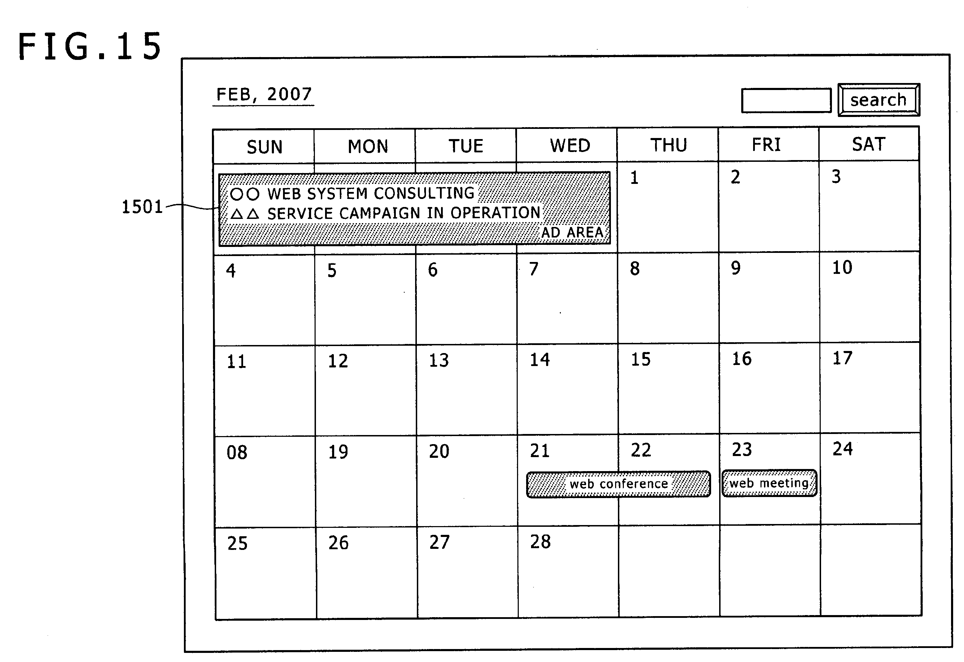

Fig. 15 shows a specific example of an AD information being displayed on the screen of the Web browser 10, which is transmitted by the AD delivery function 33 of the application provider 30. Reference numeral 1501 in the drawing is an example of such AD.

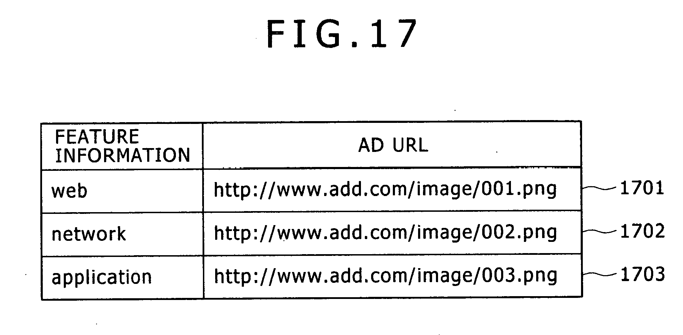

Fig. 17 is an example of the AD information 34, illustrating a relationship between feature information and URL of an AD image to be delivered. For example, 1701 shows that http://www.add.com/image/001.png is set up as a feature information-related AD image to be delivered, given that the feature information is Web. Similarly, 1702 and 1703 set up http://www.add.com/image/002png and http://www.add.com/image/003.png as feature information-related AD images to be delivered, given that the feature information are network and application, respectively. The process flow for the schedule information management application that performs AD delivery is not much different from the process flow for the schedule information management application in Fig. 3 explained in the first embodiment, except for the AD delivery part.

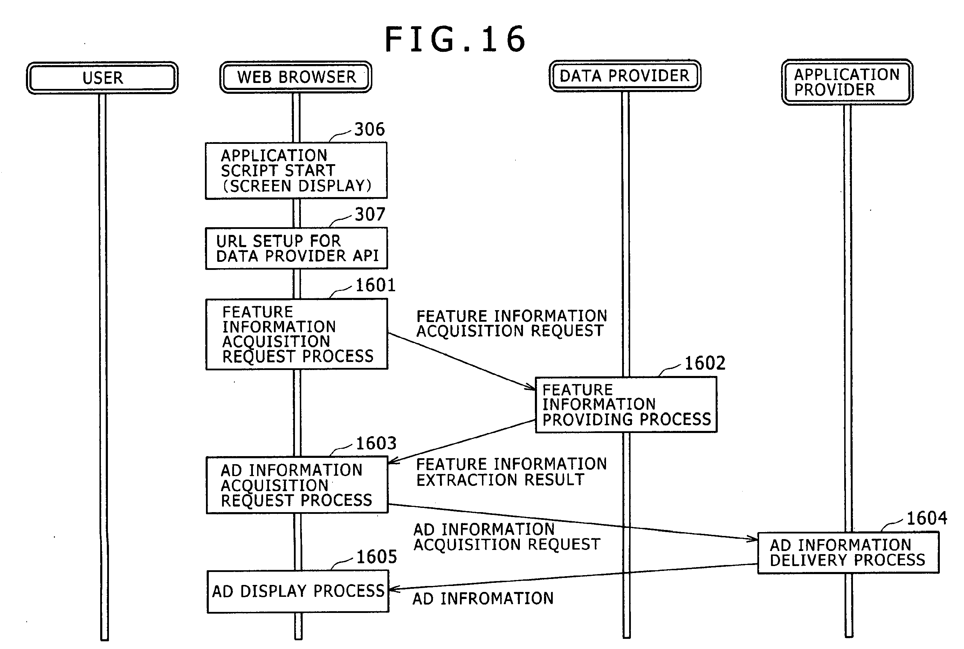

Fig. 16 is a process flow for delivery of AD, which is carried out after Step S307 of Fig. 3 in the system according to the fifth embodiment. The following will now explain the process flow for delivery of an AD, with reference to Fig. 16.

After execution of the application script 32 starts (S306) and the setup process of the data API information is completed (S307), the Web browser 10 sends the data provider 20 a content feature information acquisition request based on a user command (S1601) in order to acquire specific information on a content being displayed. According to the data API function 204, when the Web server 201 receives the feature information acquisition request, the content feature information designated by the acquisition request is taken from the content data 205 and sent to the Web browser 10, a request source, as a reply (S1602). Upon receiving the feature information, the Web browser 10 forwards the information to a corresponding processor of the application script 32 which transmitted an acquisition request for the feature information. The application script 32 sends the application provider 30 the acquisition request for a suitable AD information for the feature information (51603).

When the Web server 31 receives the AD information acquisition request, the AD delivery function 33 of the application provider 30 obtains information based on the received feature information from the AD information 34, and sends it to the Web browser 10, a request source, as a reply (S1604). After receiving the AD information, the Web browser 10 delivers it to a corresponding processor of the application script 32 that transmitted the AD information acquisition request. The application script 32 displays AD information on the screen according to the received AD information (S1605).

For instance, suppose that the data provider 20 sends "Web" as the content feature information in Step S1602, the application script 32 transmits an acquisition request for AD information suitable for "Web" to the application provider 30 (S1603). And in Step S1604 "http://www.add. com/image/001.png" (1701 in Fig. 17) is sent to the application script 32 as the AD information suitable for "Web", and the application script 32 displays an URL image indicated by "http://www.add.com/image/001.png" on the Web browser 10.

According to this embodiment, it is now possible to provide a system with a function like the data analysis process, which is closely related to data kept in the data provider 20 and which is not open to outside as the data API function, the system further including functions like the delivery of a content-based AD or the high-speed search process.

Even though an application that has been provided as a desktop application is now open on the Internet as a Web application, there were few enterprise users who actually used such Web application for the fear of information leakage.

On the other hand, with the present invention, the Web application function can be split into two: the data manipulation function and the user interface function, each being a separate service in a different domain (different server). Therefore, by applying a server with the data manipulation function to a company (or any reliable organization outside the company), it becomes possible to utilize application functions while leaving the information in the company or the like, without handing data over directly to the server (or organization providing the server) with the user interface function.

To be more specific, when the number of in-company users who uses the Web application on the Internet is increased, the business, e.g., a service providing only a user interface in use of the present invention, or a server capable of manipulating highly reliable data or a service for establishing such will be expanded.

## Claims

1. A Web application configuration method for providing an application service on a Web based on a request from a user using a Web browser (10), the method comprising the steps of:
using a user interface server (30) for providing a user interface function in the Web browser and a data manipulation server (20) for storing data and for providing a data manipulation function related to manipulation of the data;
displaying the Web browser on a display based on the user interface function of the user interface server; and
executing the data manipulation function with the data manipulation server corresponding to an input request from the Web browser displayed on the screen, and sending the manipulation result to the Web browser.

2. The method according to claim 1, wherein the data manipulation server (20) further includes a data analysis function for analyzing the data stored therein.

3. The method according to claim 2, wherein
the data manipulation,server (20) provides an analysis result of the data analysis function as the data manipulation function; and/or
the user interface function of the user interface server (30) uses the analysis result provided by the data manipulation server (20).

4. A Web application configuration system for providing an application service on a Web based on a user request, comprising:
a Web browser (10) to which the user inputs a request;
a user interface server (30) for providing a user interface function corresponding to the user request; and
a data manipulation server (20) that stores data and constitutes a data manipulation function,
wherein the Web browser receives an application script (32) for the user interface function from the user interface server, and displays the received application script on a screen, and
wherein the data manipulation server executes the data manipulation function according to a request inputted from the Web browser, and sends a manipulation result to the Web browser.

5. The system according to claim 4, wherein
the data manipulation server (20) stores a content data as the data, and
the data manipulation server (20) further includes an analysis function for analyzing the content data and storing an analysis result of the analysis function as a part of the content data.

6. The system according to claim 5, wherein the data manipulation server (20) provides the analysis result as the data manipulation function.

7. The system according to claim 5, wherein
the user interface server (30) stores an advertisement (AD) information and has a transmission function for transmitting the AD information,
the data manipulation server (20) response to an acquisition request for a content feature information from the Web browser (10) by providing the Web browser with the analysis result as the feature information,
the Web browser (10) transmits an acquisition request for an AD information which is suitable for the featuring information to the user interface server, and
the transmission function of the user interface server transmits an information related to the feature information, selected among the stored AD information.

8. The system according to claim 4, wherein the user interface server (30) and the data manipulation server (20) are installed in a data management enterprise.

9. A Web application configuration system for providing an application service on a Web based on a request from a user enterprise, comprising:
a Web browser (10) to which the user enterprise inputs a request;
a user interface server (30) installed in the user enterprise and in a data management enterprise connected through a network, and providing a user interface function corresponding to a request from the user enterprise; and
a data manipulation server (20), which is installed in the data management enterprise, stores data and constitutes a data manipulation function,
wherein the Web browser receives an application script (32) for the user interface function from the user interface server (30), and displays the received application script on a screen, and
wherein the data manipulation server executes the data manipulation function according to a request inputted from the Web browser, and sends a manipulation result to the Web browser.

10. The method of claim 1, or the system according to claim 4 or 9, wherein the data manipulation server (20) stores access information with a record of required information for accessing to the data manipulation server, sets up an access method with the user interface server (30) according to the access information, and cooperates the data manipulation function and the user interface function cooperatively.

11. The method or system of claim 10, wherein the data manipulation server (20) generates screen information to perform a process for setting up the access method with the user interface server (30) according to the access information, and provides the generated screen information to the Web browser.

12. The method or system according to claim 10 or 11, wherein the user interface server (30) stores user setup information for performing an operation setup of the user interface function for every user, and the process for setting up the access method with the user interface server (30) is operated according to the user setup information.
